# EUROPEAN PATENT APPLICATION

(11) **EP 4 694 486 A1**
(43) Date of publication of application: **11.02.2026**
(21) Application number: 24806221.8
(22) Date of filing: 03.04.2024
(51) Int. Cl.: H04W 72/231

(54) **COMMUNICATION METHOD AND APPARATUS, DEVICE, AND STORAGE MEDIUM**

(30) Priority: 12.05.2023 CN 202310540864
(71) Applicant: Huawei Technologies Co., Ltd., Shenzhen, Guangdong 518129 (CN)
(72) Inventor: CAO, Youlong, Shenzhen, Guangdong 518129 (CN); QIN, Yi, Shenzhen, Guangdong 518129 (CN); FU, Yu, Shenzhen, Guangdong 518129 (CN); XU, Rui, Shenzhen, Guangdong 518129 (CN)
(74) Representative: Goddar, Heinz J.
(86) International application number: PCT/CN2024/086118
(87) International publication number: WO 2024/234862

(57) **Abstract**

This application provides a communication method, apparatus, and device, and a storage medium. The method includes: A terminal device receives first configuration information, where the first configuration information is used to configure M candidate resources, and M is an integer greater than 1. The terminal device sends indication information, where the indication information carries an index of a first resource in the M candidate resources, and the first resource is used to send uplink information. The terminal device performs uplink transmission by using the first resource in the M candidate resources, so that a transmission delay is reduced. Further, the terminal device indicates the index of the first resource to a network device by using the indication information, so that the network device does not perform blind detection on the M candidate resources, thereby reducing communication complexity of the network device.

## Description

This application claims priority to Chinese Patent Application No. 202310540864.1, filed with the China National Intellectual Property Administration on May 12, 2023 and entitled "COMMUNICATION METHOD, APPARATUS, AND DEVICE, AND STORAGE MEDIUM", which is incorporated herein by reference in its entirety.

### TECHNICAL FIELD

This application relates to the field of communication technologies, and in particular, to a communication method, apparatus, and device, and a storage medium.

### BACKGROUND

A multi-modal service implemented based on an extended reality (extended reality, XR) technology can provide a user with comprehensive interactive experience in terms of visual, auditory, tactile, and kinetic senses. When the multi-modal service is implemented by using the XR technology, data transmission needs to be performed between a terminal and a base station, and there is a low-delay requirement for data transmission.

In some communication systems, for example, in a 5th generation mobile communication system (5th generation wireless system, 5G), an interaction process in which a terminal sends data to a base station is relatively complex. For example, before sending the data, the terminal needs to first trigger SR reporting, and then perform BSR reporting, which cannot implement data transmission with a low-delay requirement. As a result, there is no effective transmission solution for data that has a low-delay requirement, including data for implementing the XR technology.

### SUMMARY

Embodiments of this application provide a communication method, apparatus, and device, and a storage medium, to provide an effective transmission solution to meet data transmission with a low-delay requirement.

According to a first aspect, an embodiment of this application provides a communication method. The method may be performed by a terminal device or a component (for example, a chip or a chip system) in a terminal device. For ease of description, the following uses the terminal device as an execution body for description.

The method includes: A terminal device receives first configuration information, where the first configuration information is used to configure M candidate resources, and M is an integer greater than 1. The terminal device sends indication information, where the indication information carries an index of a first resource in the M candidate resources, and the first resource is used to send uplink information.

In this embodiment of this application, the terminal device may perform uplink transmission by using the first resource in the M candidate resources, without configuring resources before each uplink transmission, so that a transmission delay is reduced. Further, the terminal device indicates the index of the first resource to the network device by using the indication information, so that the network device does not perform blind detection on the M candidate resources, thereby reducing communication complexity of the network device.

In a possible implementation, the index of the first resource is related to one of the following: a frequency domain resource allocation (frequency domain resource allocation, FDRA) index that is in the first configuration information and that is used to configure the first resource; and a sequence number of the first resource in the M candidate resources, where the M candidate resources are sorted based on resource sizes and/or frequency domain positions. Based on this implementation, complexity of determining the index of the first resource is reduced, so that the network device determines a position of the first resource bearing the uplink information, and complexity of the blind detection performed by the network device is reduced.

In a possible implementation, the M candidate resources include resources configured by M configured grants (configured grants, CGs); and a value of the index of the first resource is related to an index of a CG corresponding to the first resource. Based on this implementation, complexity of determining the index of the first resource is reduced, so that the network device determines a position of the first resource bearing the uplink information, and complexity of the blind detection performed by the network device is reduced.

In a possible implementation, the indication information occupies a second resource; and the second resource belongs to an m^{th} candidate resource in the M candidate resources.

Optionally, the m^{th} candidate resource is a candidate resource with a smallest index in the M candidate resources. This implementation is more applicable, the second resource is not limited by the M candidate resources, and an overlapped region does not need to be determined, thereby reducing processing complexity.

In a possible implementation, a resource starting position of the second resource is a resource starting position of the m^{th} candidate resource. Based on this implementation, the indication information is mapped starting from the resource starting position of the m^{th} candidate resource, thereby reducing the processing complexity of the blind detection performed by the network device.

In a possible implementation, the second resource belongs to an overlapped region of at least two candidate resources in the M candidate resources. This implementation is more applicable to a scenario in which at least two candidate resources in the M candidate resources overlap, and increases a possibility of transmitting the indication information and the uplink information on a same resource, thereby ensuring an advantage of reducing a communication delay.

In a possible implementation, the M candidate resources form at least two overlapped regions, and the second resource belongs to an overlapped region with a relatively high overlapping degree in the at least two overlapped regions; and the overlapping degree of the overlapped region is positively correlated with a quantity of candidate resources forming the overlapped region and/or a size of the overlapped region. If an overlapped region with a relatively high overlapping degree is selected to send the indication information, the possibility of transmitting the indication information and the uplink information on the same resource is higher, and an advantage of reducing the communication delay is enhanced.

Optionally, a resource starting position of the second resource is a position of a resource block (resource block, RB) with a smallest sequence number in the overlapped region.

Optionally, the M candidate resources form at least two overlapped regions; and a resource starting position of the second resource is a position of an RB with a smallest sequence number in the at least two overlapped regions.

In a possible implementation, the indication information occupies a second resource, and the method further includes: receiving second configuration information, where the second configuration information indicates the second resource. The second configuration information may belong to radio resource control (radio resource control, RRC) signaling.

In a possible implementation, a quantity of RBs occupied by the second resource is a preset value.

In a possible implementation, the method further includes: receiving third configuration information, where the third configuration information indicates a quantity of RBs occupied by the second resource.

The quantity of RBs is preset or configured, so that the complexity of the blind detection performed by the network device can be further reduced.

In a possible implementation, the M candidate resources have a same time domain position but different frequency domain positions. This provides a higher possibility for the terminal device to select a resource that matches the to-be-transmitted uplink information.

In a possible implementation, the M candidate resources include at least two candidate resources of different resource sizes. When the M candidate resources include the candidate resources of different resource sizes, the M candidate resources can better match uplink information of different sizes. It may be understood that when the resource sizes of the M candidate resources are all different, a higher possibility may be provided for matching with the uplink information.

According to a second aspect, an embodiment of this application provides a communication method. The communication method may be applied to a network device or a component (for example, a chip or a chip system) in a network device. For ease of description, the network device is used as an execution body for description.

The method includes: A network device sends first configuration information, where the first configuration information is used to configure M candidate resources, and M is an integer greater than 1. The network device receives indication information, where the indication information carries an index of a first resource in the M candidate resources, and the first resource is used to send uplink information.

In a possible implementation, the index of the first resource is related to one of the following: a frequency domain resource allocation FDRA index that is in the first configuration information and that is used to configure the first resource; and a sequence number of the first resource in the M candidate resources, where the M candidate resources are sorted based on resource sizes and/or frequency domain positions.

In a possible implementation, the M candidate resources include resources configured by M configured grants CGs; and a value of the index of the first resource is related to an index of a CG corresponding to the first resource.

In a possible implementation, the indication information occupies a second resource; and the second resource belongs to an m^{th} candidate resource in the M candidate resources.

In a possible implementation, the m^{th} candidate resource is a candidate resource with a smallest index in the M candidate resources.

In a possible implementation, a resource starting position of the second resource is a resource starting position of the m^{th} candidate resource.

In a possible implementation, the second resource belongs to an overlapped region of at least two candidate resources in the M candidate resources.

In a possible implementation, the M candidate resources form at least two overlapped regions, and the second resource belongs to an overlapped region with a relatively high overlapping degree in the at least two overlapped regions; and the overlapping degree of the overlapped region is positively correlated with a quantity of candidate resources forming the overlapped region and/or a size of the overlapped region.

In a possible implementation, a resource starting position of the second resource is a position of a resource block RB with a smallest sequence number in the overlapped region.

In a possible implementation, the M candidate resources form at least two overlapped regions; and a resource starting position of the second resource is a position of an RB with a smallest sequence number in the at least two overlapped regions.

In a possible implementation, the indication information occupies a second resource, and the method further includes: sending second configuration information, where the second configuration information indicates the second resource.

In a possible implementation, a quantity of RBs occupied by the second resource is a preset value.

In a possible implementation, the method further includes: sending third configuration information, where the third configuration information indicates a quantity of RBs occupied by the second resource.

In a possible implementation, the M candidate resources have a same time domain position but different frequency domain positions.

In a possible implementation, the M candidate resources include at least two candidate resources of different resource sizes.

According to a third aspect, an embodiment of this application provides a communication apparatus, including a transceiver module and a processing module. The transceiver module is configured to receive first configuration information, where the first configuration information is used to configure M candidate resources, and M is an integer greater than 1. The processing module is configured to determine a first resource from the M candidate resources. The transceiver module is further configured to send indication information, where the indication information carries an index of the first resource in the M candidate resources, and the first resource is used to send uplink information.

In a possible implementation, the index of the first resource is related to one of the following: a frequency domain resource allocation FDRA index that is in the first configuration information and that is used to configure the first resource; and a sequence number of the first resource in the M candidate resources, where the M candidate resources are sorted based on resource sizes and/or frequency domain positions.

In a possible implementation, the M candidate resources include resources configured by M configured grants CGs; and a value of the index of the first resource is related to an index of a CG corresponding to the first resource.

In a possible implementation, the indication information occupies a second resource; and the second resource belongs to an m^{th} candidate resource in the M candidate resources.

In a possible implementation, the m^{th} candidate resource is a candidate resource with a smallest index in the M candidate resources.

In a possible implementation, a resource starting position of the second resource is a resource starting position of the m^{th} candidate resource.

In a possible implementation, the second resource belongs to an overlapped region of at least two candidate resources in the M candidate resources.

In a possible implementation, the M candidate resources form at least two overlapped regions, and the second resource belongs to an overlapped region with a relatively high overlapping degree in the at least two overlapped regions; and the overlapping degree of the overlapped region is positively correlated with a quantity of candidate resources forming the overlapped region and/or a size of the overlapped region.

In a possible implementation, a resource starting position of the second resource is a position of a resource block RB with a smallest sequence number in the overlapped region.

In a possible implementation, the M candidate resources form at least two overlapped regions; and a resource starting position of the second resource is a position of an RB with a smallest sequence number in the at least two overlapped regions.

In a possible implementation, the indication information occupies a second resource, and the transceiver module is further configured to receive second configuration information, where the second configuration information indicates the second resource.

In a possible implementation, the second configuration information belongs to radio resource control RRC signaling.

In a possible implementation, a quantity of RBs occupied by the second resource is a preset value.

In a possible implementation, the transceiver module is further configured to receive third configuration information, where the third configuration information indicates a quantity of RBs occupied by the second resource.

In a possible implementation, the M candidate resources have a same time domain position but different frequency domain positions.

In a possible implementation, the M candidate resources include at least two candidate resources of different resource sizes.

According to a fourth aspect, an embodiment of this application provides a communication apparatus, including a transceiver module and a processing module. The transceiver module is configured to send first configuration information, where the first configuration information is used to configure M candidate resources, and M is an integer greater than 1. The transceiver module is further configured to receive indication information, where the indication information carries an index of a first resource in the M candidate resources, and the first resource is used to send uplink information. The processing module is configured to determine the first resource.

In a possible implementation, the index of the first resource is related to one of the following: a frequency domain resource allocation FDRA index that is in the first configuration information and that is used to configure the first resource; and a sequence number of the first resource in the M candidate resources, where the M candidate resources are sorted based on resource sizes and/or frequency domain positions.

In a possible implementation, the M candidate resources include resources configured by M configured grants CGs; and a value of the index of the first resource is related to an index of a CG corresponding to the first resource.

In a possible implementation, the indication information occupies a second resource; and the second resource belongs to an m^{th} candidate resource in the M candidate resources.

In a possible implementation, the m^{th} candidate resource is a candidate resource with a smallest index in the M candidate resources.

In a possible implementation, a resource starting position of the second resource is a resource starting position of the m^{th} candidate resource.

In a possible implementation, the second resource belongs to an overlapped region of at least two candidate resources in the M candidate resources.

In a possible implementation, the M candidate resources form at least two overlapped regions, and the second resource belongs to an overlapped region with a relatively high overlapping degree in the at least two overlapped regions; and the overlapping degree of the overlapped region is positively correlated with a quantity of candidate resources forming the overlapped region and/or a size of the overlapped region.

In a possible implementation, a resource starting position of the second resource is a position of a resource block RB with a smallest sequence number in the overlapped region.

In a possible implementation, the M candidate resources form at least two overlapped regions; and a resource starting position of the second resource is a position of an RB with a smallest sequence number in the at least two overlapped regions.

In a possible implementation, the indication information occupies a second resource, and the transceiver module is further configured to send second configuration information, where the second configuration information indicates the second resource.

In a possible implementation, a quantity of RBs occupied by the second resource is a preset value.

In a possible implementation, the transceiver module is further configured to send third configuration information, where the third configuration information indicates a quantity of RBs occupied by the second resource.

In a possible implementation, the M candidate resources have a same time domain position but different frequency domain positions.

In a possible implementation, the M candidate resources include at least two candidate resources of different resource sizes.

According to a fifth aspect, an embodiment of this application provides a communication device, including a processor and a memory. The memory is configured to store a computer program, and the processor is configured to invoke and run the computer program stored in the memory, to perform the method according to the first aspect, the second aspect, or the possible implementations.

According to a sixth aspect, an embodiment of this application provides a chip, including a processor. The processor is configured to: invoke computer instructions from a memory and run the computer instructions, to enable a device in which the chip is installed to perform the method according to the first aspect, the second aspect, or the possible implementations.

According to a seventh aspect, an embodiment of this application provides a computer-readable storage medium, configured to store computer program instructions. The computer program enables a computer to perform the method according to the first aspect, the second aspect, or the possible implementations.

According to an eighth aspect, an embodiment of this application provides a computer program product, including computer program instructions. The computer program instructions enable a computer to perform the method according to the first aspect, the second aspect, or the possible implementations.

According to a ninth aspect, an embodiment of this application provides a communication system, including the communication apparatus according to the third aspect or the possible implementations and the communication apparatus according to the fourth aspect or the possible implementations.

For beneficial effect of the communication apparatus in the second aspect to the ninth aspect and the possible implementations, refer to the beneficial effect brought by the first aspect and the possible implementations of the first aspect. Details are not described herein again.

### BRIEF DESCRIPTION OF DRAWINGS

FIG. 1 is a diagram of an architecture of a communication system 100 to which an embodiment of this application is applied;
FIG. 2a is a schematic flowchart of dynamic scheduling according to an embodiment of this application;
FIG. 2b is a schematic flowchart of CG configuration according to an embodiment of this application;
FIG. 2c is a schematic flowchart of other CG configuration according to an embodiment of this application;
FIG. 3 is a diagram of a transmission slot according to an embodiment of this application;
FIG. 4 is a schematic interaction flowchart of a communication method according to an embodiment of this application;
FIG. 5 is a schematic interaction flowchart of another communication method according to an embodiment of this application;
FIG. 6a is a diagram of an overlapped region according to an embodiment of this application;
FIG. 6b is a diagram of another overlapped region according to an embodiment of this application;
FIG. 6c is a diagram of another overlapped region according to an embodiment of this application;
FIG. 7 is a block diagram of a communication apparatus according to an embodiment of this application; and
FIG. 8 is another block diagram of a communication apparatus according to an embodiment of this application.

### DESCRIPTION OF EMBODIMENTS

The following describes technical solutions of this application with reference to accompanying drawings.

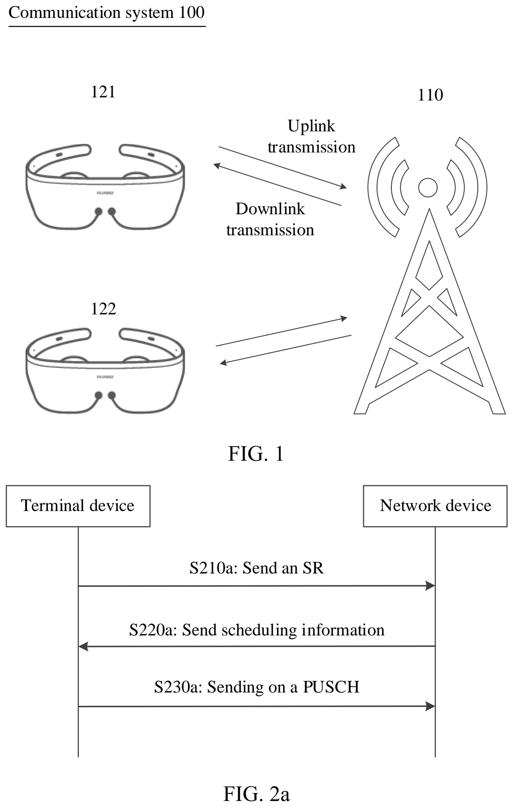

FIG. 1 is a diagram of an architecture of a communication system 100 to which an embodiment of this application is applied. As shown in FIG. 1, the communication system 100 includes a network device and a terminal device, for example, a network device 110, a terminal device 121, and a terminal device 122 shown in FIG. 1. The network device 110 may communicate with each of the terminal devices 121 and 122 through a wireless air interface. The terminal device (for example, 121) sends signaling and/or data to the network device 110 for uplink transmission, and the network device 110 sends signaling and/or data to the terminal device (for example, 121) for downlink transmission. Certainly, signaling and/or data may also be transmitted between the terminal device (for example, 121) and the terminal device (for example, 122). This is not limited in this application.

It should be understood that FIG. 1 is merely an example, and shows one network device and two terminal devices. However, this shall not constitute any limitation on this application. The communication system 100 may further include more network devices, or may include more or fewer terminal devices. This is not limited in embodiments of this application.

The network device may be a radio access device that is in the communication system and that is accessed by a terminal in a wireless manner. The radio access device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or unit that completes some functions of a base station, for example, may be a central unit (central unit, CU), or may be a distributed unit (distributed unit, DU). The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete some or all of functions of a physical layer. For specific descriptions of the foregoing protocol layers, refer to technical specifications related to a 3rd generation partnership project (3rd generation partnership project, 3GPP). The radio access network device may be a macro base station, may be a micro base station or an indoor base station, or may be a relay node, a donor node, or the like. A specific technology and a specific device form that are used by the radio access network device are not limited in embodiments of this application.

The terminal device is a device with a wireless transceiver function, and may send a signal to the base station, or receive a signal from the base station. The terminal may also be referred to as user equipment (user equipment, UE), a mobile station, a mobile terminal, or the like. The terminal device may be widely used in various scenarios, such as extended reality, industrial control, self-driving, telemedicine, smart grid, smart furniture, smart office, smart wearable, intelligent transportation, smart city, device-to-device (device-to-device, D2D), vehicle to everything (vehicle to everything, V2X) communication, machine-type communication (machine-type communication, MTC), and internet of things (internet of things, IoT). The terminal device may be a mobile phone, a tablet computer, a computer having a wireless transceiver function, a wearable device, a vehicle, an airplane, a ship, a robot, a robotic arm, a smart home device, or the like. A specific technology and a specific device form that are used by the terminal are not limited in embodiments of this application.

The network device and the terminal device may be fixed at a position, or may be movable. The network device and the terminal device may be deployed on land, including being deployed indoors or outdoors, or in a handheld manner or a vehicle-mounted manner; may be deployed on water; or may be deployed on an airplane, a balloon, and a man-made satellite. Application scenarios of the base station and the terminal are not limited in embodiments of this application.

Communication may be performed between a network device and a terminal device, between terminal devices, or between network devices by using a licensed spectrum, an unlicensed spectrum, or both a licensed spectrum and an unlicensed spectrum; may be performed by using a spectrum below 6 gigahertz (gigahertz, GHz); may be performed by using a spectrum above 6 GHz; or may be performed by using both a spectrum below 6 GHz and a spectrum above 6 GHz. A spectrum resource used for wireless communication is not limited in embodiments of this application.

In embodiments of this application, functions of the network device may be performed by a module (for example, a chip) in the network device, or may be performed by a control subsystem including the functions of the network device. Herein, the control subsystem including the functions of the network device may be a control center in the foregoing application scenarios such as smart grid, industrial control, intelligent transportation, and smart city. Functions of the terminal device may be performed by a module (for example, a chip or a modem) in the terminal device, or may be performed by an apparatus including the functions of the terminal device.

In this application, the network device sends a downlink signal or downlink information to the terminal device, and the downlink information is carried on a downlink channel; and the terminal device sends an uplink signal or uplink information to the network device, and the uplink information is carried on an uplink channel. For consistency, the downlink signal and the downlink information are collectively referred to as the downlink information, and the uplink signal and the uplink information are collectively referred to as the uplink information below. To communicate with the network device, the terminal device needs to establish a wireless connection with a cell controlled by the network device. A cell that establishes a wireless connection to the terminal device is referred to as a serving cell of the terminal.

The following describes embodiments of this application by using an example in which the terminal device is used in an XR scenario.

For ease of understanding, an XR technology and related terms are first described. The XR technology has entered various fields closely related to people's production and life, such as education, entertainment, medical care, environmental protection, transportation, and public health. Extended reality is a general term of various reality-related technologies, and may specifically include a virtual reality (virtual reality, VR) technology, an augmented reality (augmented reality, AR) technology, and a mixed reality (mixed reality, MR) technology.

The VR technology refers to rendering a scene to simulate a virtual world of three-dimensional space as realistically as possible and provide a user with simulation of senses, such as visual, auditory, and tactile senses. The VR technology usually requires the user to wear a head-mounted display (head-mounted display, HMD) to completely replace the user's field of view with simulated visual components, and also requires the user to wear headsets to provide accompanying audio for the user.

The AR technology superimposes virtual objects, scenarios, or system prompt information generated by a computer into real scenarios, and displays scenarios that cannot be implemented in the real world, thereby "augmenting" reality and delivering sensory experiences that transcend the reality.

The MR technology is an advanced form of AR. One implementation of the MR technology is to insert some virtual elements into a physical scenario, so that physical and digital objects coexist in an environment and interact in real time, to provide the user with immersive experience in which these elements are a part of the real scenarios.

In any XR scenario, an XR device may send, to a network side, a multimedia signal collected by a sensor; or may receive multimedia data from a network side to present a virtual scenario, and support interaction between virtual and real by transmitting the multimedia data. The multimedia data may include, but is not limited to, a tactile signal, an image signal, and an audio signal. For example, the XR device may collect a tactile signal of the user through a tactile sensor, collect an audio signal of the user and/or a surrounding environment through a sound sensor, and collect an image signal of the user and/or the surrounding environment through an image sensor.

A transmission delay of the multimedia signal affects interaction experience of the user. Therefore, there is a corresponding delay requirement for transmitting the multimedia signal. Uplink transmission of the tactile signal is used as an example. After tactile coding, a signal generated by each tactile sensor is encapsulated into a data packet, and the data packet randomly arrives at a physical layer of the terminal device, to wait for air interface transmission. When a same user uses a plurality of sensors at the same time, a data packet of each sensor arrives randomly. As a result, data arriving at a network is also uneven in size. Due to an aperiodic nature of the tactile signal and a variable size of the data packet, higher requirements are imposed on communication transmission reliability and a communication transmission delay. Currently, according to the standards of the 3rd generation partnership project (3rd generation partnership project, 3GPP), a transmission delay of the tactile signal does not exceed 5 ms.

Refer to the communication system shown in FIG. 1. In the XR scenario, the terminal device may send the uplink information to the network device in at least the following two manners.

Manner 1: The terminal device implements uplink transmission based on dynamic scheduling of the network device.

Refer to FIG. 2a. In S210a, the terminal device may send a scheduling request (scheduling request, SR) to the network device on a physical uplink control channel (physical uplink control channel, PUCCH), to request an uplink grant. In S220a, the network device sends scheduling information, for example, a format (format) 0_0 or a format 0_1 of downlink control information (downlink control Information, DCI), to the terminal device on a physical downlink control channel (physical downlink control channel, PDCCH). In S230a, the terminal device sends a buffer status report (buffer status report, BSR) and uplink data on a physical uplink shared channel (physical uplink shared channel, PUSCH) allocated by the network device, where the BSR is used to notify the network device of an amount of uplink data that further needs to be sent. When the received BSR is greater than 0, the network device continues to schedule the PUSCH to the terminal device.

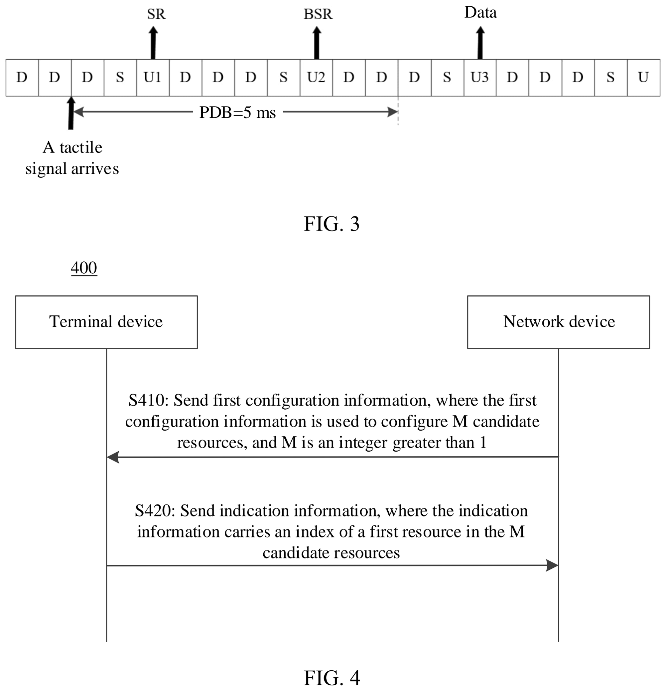

In the XR scenario, with reference to Manner 1, referring to FIG. 3, when a slot configuration is DDDSU and a subcarrier spacing is 30 kHz, a length of one slot is 0.5 ms, where D represents a downlink slot, S represents a flexible slot, and U represents an uplink slot. After the tactile signal arrives, the terminal device triggers SR reporting in U 1, performs BSR reporting in U 2, and performs data transmission in the third uplink slot U 3 after the tactile signal arrives. In this case, a packet delay budget (packet delay budget, PDB), that is, 5 ms, is exceeded, and consequently, a requirement for the transmission delay of the tactile signal cannot be met.

It can be learned that the uplink transmission manner in Manner 1 cannot meet a low-delay requirement for transmission.

Manner 2: The terminal device implements uplink transmission based on a CG. For ease of description, a time-frequency resource configured by the CG may be referred to as a CG resource, and CG resource configuration is referred to as CG configuration.

In Manner 2, an uplink scheduling resource needs to be allocated or specified only once by using RRC signaling and/or a downlink control channel (physical downlink control channel, PDCCH), and then the terminal device may perform uplink transmission by periodically using the time-frequency resource configured by the CG.

The CG configuration may include the following two types.

Type 1: By using RRC signaling, transmission parameters of the CG are configured and the CG resource is activated. The transmission parameters include, for example, a radio network temporary identifier (Configured Scheduling Radio Network Temporary identifier, CS-RNTI), a periodicity of the CG, a time domain resource of the CG, a frequency domain resource of the CG, and a modulation and coding scheme (modulation and coding scheme, MCS).

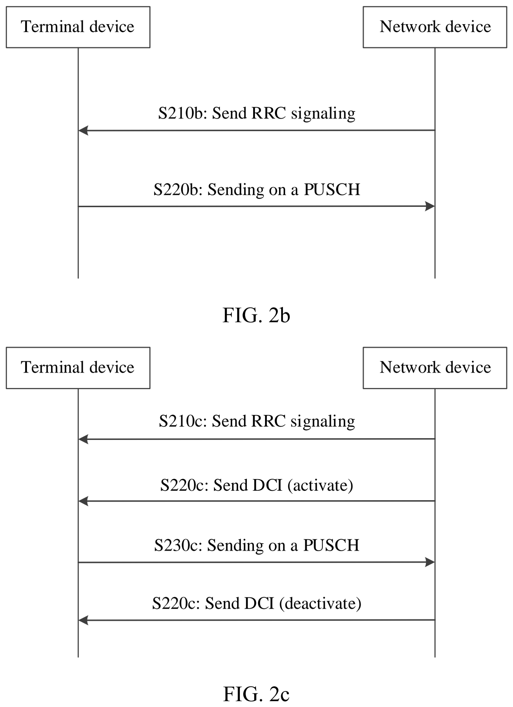

Refer to FIG. 2b. In S210b, the network device sends RRC signaling to the terminal device, to perform parameter configuration and activate the CG resource. In S220b, the terminal device performs uplink transmission on a PUSCH configured by the CG.

Type 2: Some transmission parameters of the CG, such as a CS-RNTI and a periodicity of the CG, are configured by using RRC signaling, and the other transmission parameters, such as a time domain resource of the CG, a frequency domain resource of the CG, and an MCS, are indicated by using DCI. In addition, the DCI activates the CG resource. The time domain resource of the CG may be indicated by using a time domain resource allocation (time domain resource allocation, TDRA) field in the signaling, and the frequency domain resource of the CG may be indicated by using an FDRA field in the signaling.

Refer to FIG. 2c. In S210c, the network device sends the RRC signaling to the terminal device, to perform parameter configuration. In S220c, the network device sends the DCI to the terminal device, to activate the CG resource. In S230c, the terminal device performs uplink transmission to the network device on a PUSCH configured by the CG. In S240c, the network device sends DCI to the terminal device, to deactivate the activated CG.

In Type 1 and Type 2, the transmission parameters indicated by the RRC signaling further includes an index of the CG. For example, the index of the CG is indicated by using a configured grant configuration index (ConfiguredGrantConfigIndex) field in the signaling.

In the XR scenario, with reference to Manner 2, because the tactile signal obtained through tactile coding is aperiodic, and a data amount of the tactile signal that needs to be uploaded in each uplink slot is variable, it is difficult to match the allocated CG resource with the data amount of the transmitted tactile signal. If the allocated CG resource is relatively large, resource waste is caused; or if the allocated CG resource is relatively small, the transmission delay is increased.

It can be learned that, when the uplink transmission manner in Manner 2 meets a low-delay requirement for transmission, a preferred transmission solution cannot be provided either.

For the foregoing technical problems, in embodiments of this application, a first resource used to send the uplink information is selected from M candidate resources, to transmit the uplink information, where M is an integer greater than 1. This can avoid a problem that the transmission delay is increased when an uplink resource is requested only after the to-be-transmitted information arrives, and can alleviate a problem that it is difficult to match the configured CG resource with a size of the to-be-transmitted information. Further, in embodiments of this application, the terminal device indicates an index of the first resource to the network device by using indication information, to avoid a problem that complexity is increased when the network device performs blind detection on the M candidate resources.

It should be noted that, in embodiments of this application, only the tactile signal is used as an example for description, but this is not limited thereto. A communication method provided in this application is also applicable to another signal, for example, an audio signal or an image signal. In addition, the communication method provided in this application is not limited to being applied to the XR scenario.

For ease of understanding of embodiments of this application, the following several descriptions are provided.

First, the terms "first", "second", and various numbers in the following embodiments are only used for differentiation for ease of description, and are not used to limit the scope of embodiments of this application, for example, are used to distinguish between different resources or different configuration information.

Second, the term "protocol" in embodiments of this application may be a standard protocol in the communication field, for example, may include a long term evolution (Long Term Evolution, LTE) system protocol, a new radio access technology (new radio access technology, NR) protocol, and a related protocol applied to a future communication system. This is not limited in this application.

Third, in embodiments of this application, that two indexes are the same may mean that values of the two indexes are the same, and that one index is obtained through calculation based on the other index may mean that a value of one index is obtained through calculation based on a value of the other index. A size relationship between the indexes may be a size relationship between the values of the indexes.

With reference to the accompanying drawings, the following describes in detail the communication method provided in embodiments of this application.

It should be understood that, for ease of understanding and description, the following describes in detail the method provided in embodiments of this application through interaction between a terminal device and a network device as an example.

The terminal device may be, for example, the terminal device 121 or 122 in FIG. 1, and the network device may be the network device 110 in FIG. 1.

FIG. 4 is a schematic interaction flowchart of a communication method 400 according to an embodiment of this application. As shown in FIG. 4, the method 400 may include S410 and S420. The following describes steps in the method 400 in detail.

S410: A network device sends first configuration information to a terminal device, where the first configuration information is used to configure M candidate resources, and M is an integer greater than 1. Correspondingly, the terminal device receives the first configuration information sent by the network device.

S420: The terminal device sends indication information to the network device, where the indication information carries an index of a first resource in the M candidate resources, and the first resource is used to send uplink information. Correspondingly, the network device receives the indication information sent by the terminal device.

The first configuration information may be DCI, or DCI may bear the first configuration information. The network device may send the first configuration information to the terminal device in response to a request of the terminal device. For example, the network device receives an SR of the terminal device, and then sends the first configuration information to the terminal device. For this process, refer to S210a and S220b in FIG. 2a. A difference is that the DCI sent in S220b is used to configure one resource while the first configuration information in S410 is used to configure M candidate resources. However, this is not limited in this application. The network device may directly configure the M candidate resources. In other words, the network device sends the first configuration information without a need to respond to a request (for example, an SR) of the terminal device.

Alternatively, the M candidate resources may be resources configured by M CGs. The first configuration information may be used to configure the M CGs. In this case, the first configuration information may include RRC signaling and/or DCI, or RRC signaling and/or DCI may bear the first configuration information. For example, S410 may be implemented as S210b in FIG. 2b, and may be implemented as S210c and S220c in FIG. 2c. A difference is that one CG is configured in both FIG. 2b and FIG. 2c while the first configuration information in S410 is used to configure M CGs.

Type 2 shown in FIG. 2c is used as an example. The network device may send the RRC signaling to the terminal device, to configure a plurality of CGs; and the network device may send the DCI to the terminal device, to indicate an activated CG, where transmission parameters indicated by the DCI further include an index of the activated CG.

When the M candidate resources are the resources configured by the M CGs, the M candidate resources may be resources respectively configured by the M CGs in one time unit. Optionally, to enhance a capability of matching the M candidate resources with the uplink information, and provide a higher possibility of selecting a time-frequency resource that matches the uplink information, the M CGs may have a same periodicity. In other words, the M candidate resources may be resources configured by the M CGs in a same periodicity.

Time domain positions of the M candidate resources may be the same, to provide, on each uplink transmission moment, the terminal device with a relatively large quantity of resources for selection. Frequency domain positions of the M candidate resources may be different, to provide a higher possibility for the terminal device to select a resource that matches the to-be-transmitted uplink information. When the time domain positions of the M candidate resources are the same, the M candidate resources in this embodiment of this application may be understood as M candidate frequency domain resources.

Resource sizes of the M candidate resources may be the same or different. This is not limited in this application. When the M candidate resources include candidate resources of different resource sizes, the M candidate resources can better match uplink information of different sizes. It may be understood that when the resource sizes of the M candidate resources are all different, a higher possibility may be provided for matching with the uplink information.

The terminal device may determine the first resource from the M candidate resources, to transmit the uplink information by using the first resource. The first resource may be a resource that is in the M candidate resources and that best matches an information amount of the uplink information. For example, the first resource may be a smallest resource that is in the M candidate resources and that can bear the uplink information. That the terminal device transmits the uplink information by using the first resource may be mapping the uplink information (for example, PUSCH data) on the first resource according to a rule of frequency domain first and then time domain. For example, the uplink information may be mapped starting from a resource starting position of the first resource.

The terminal device may send the indication information before sending the uplink information, or after sending the uplink information, or synchronously with sending the uplink information, to indicate the index of the first resource. This is not limited in this application. It should be understood that the terminal device may perform S420 during each uplink transmission, but is not required to perform S410 during each uplink transmission.

The indication information may be uplink control information (uplink control information, UCI), or UCI may bear the indication information.

The index of the first resource may be related to an FDRA index. For example, the index of the first resource may be the same as an FDRA index indicating the first resource, or may be obtained through calculation based on an FDRA index indicating the first resource, for example, may be a multiple of the FDRA index. The M candidate resources may be respectively configured by using M pieces of FDRA information. The M pieces of FDRA information is in a one-to-one correspondence with the M candidate resources. FDRA information is used to configure a corresponding candidate resource, and different FDRA information may be indicated by using different indexes, where the indexes are FDRA indexes. In two different examples, the M pieces of FDRA information may be M FDRA fields, or the M pieces of FDRA information may be M different bit combinations in an FDRA field.

In the first example, the M FDRA fields may be mutually independent fields, or the M FDRA fields may be subfields in an FDRA field. In the second example, different bits in the FDRA field may be arranged and combined. It is assumed that the FDRA field has 2 bits. A value of an index corresponding to a 1^{st} bit is 0, a value of an index corresponding to a 2^{nd} bit is 1, and a value of an index corresponding to the 1^{st} bit and the 2^{nd} bit is 2.

The index of the first resource may be related to a sequence number of the first resource in the M candidate resources. For example, the index of the first resource may be the same as the sequence number of the first resource in the M candidate resources. Assuming that the sequence number of the first resource in the M candidate resources is 3, a value of the index of the first resource is 3. For another example, the index of the first resource may be obtained through calculation based on the sequence number of the first resource in the M candidate resources. The M candidate resources may be sorted based on the resource sizes. For example, the M candidate resources are sorted in descending (or ascending) order of the resource sizes of the candidate resources. Alternatively, the M candidate resources may be sorted based on the frequency domain positions. For example, the M candidate resources are sorted in descending (or ascending) order of frequencies of frequency domain starting positions (or frequency domain ending positions, or frequency domain center positions) of the candidate resources. Alternatively, the M candidate resources may be sorted based on the resource sizes and frequency positions. For example, the M candidate resources are preferentially sorted in descending (or ascending) order of the resource sizes of the candidate resources, and then sorted in descending (or ascending) order of frequencies of frequency domain starting positions (or frequency domain ending positions, or frequency domain center positions) of the candidate resources. For another example, the M candidate resources are preferentially sorted in descending (or ascending) order of frequencies of frequency domain starting positions (or frequency domain ending positions, or frequency domain center positions) of the candidate resources, and then sorted in descending (or ascending) order of the resource sizes of the candidate resources.

When the M candidate resources are the resources configured by the M CGs, the index of the first resource may be related to an index of a CG corresponding to the first resource. For example, the index of the first resource may be the same as the index of the CG corresponding to the first resource, or the index of the first resource may be obtained through calculation based on the index of the CG corresponding to the first resource. As described above, the index of the CG may be indicated by using a ConfiguredGrantConfigIndex field in the signaling.

In this embodiment of this application, the terminal device may perform uplink transmission by using the first resource in the M candidate resources, without configuring resources before each uplink transmission, so that a transmission delay is reduced. Further, the terminal device indicates the index of the first resource to the network device by using the indication information, so that the network device does not perform blind detection on the M candidate resources, thereby reducing communication complexity of the network device.

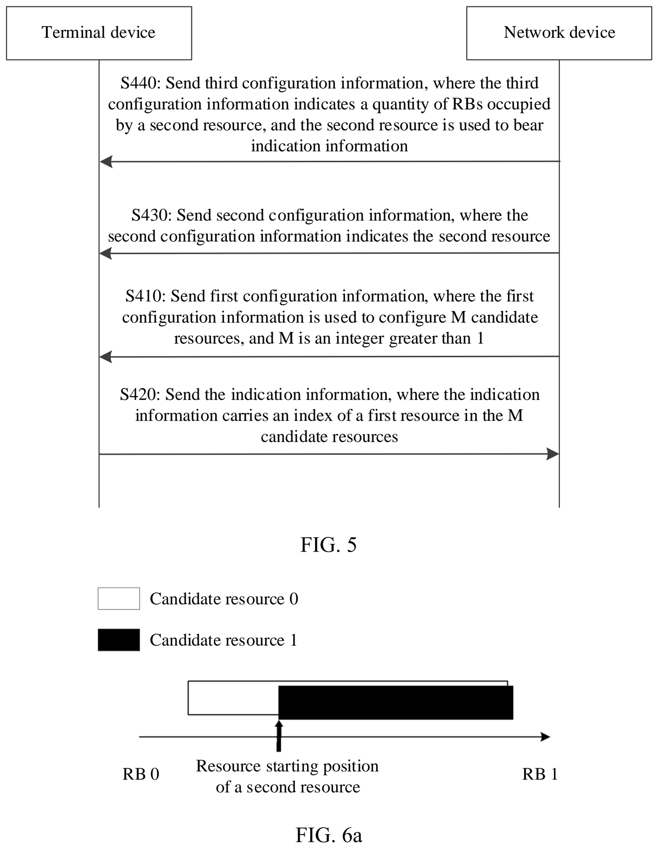

To further reduce the communication complexity of the network device, in this embodiment of this application, a second resource occupied by the indication information may be agreed on. The second resource may be agreed on in a protocol, or the second resource may be configured by the network device. Refer to FIG. 5. The method 400 further includes S430: The network device sends second configuration information to the terminal device, where the second configuration information indicates the second resource. Optionally, RRC signaling or DCI may bear the second configuration information. It should be understood that a sequence of performing S430 and S410 is not limited in this application. For example, S430 and S410 may be performed synchronously, or S430 may be performed before S410, or S430 may be performed after S410.

The second resource may belong to an m^{th} candidate resource in the M candidate resources. In other words, the second resource may include some or all resources in an m^{th} candidate resource. If the m^{th} candidate resource cannot bear the entire indication information, the second resource may include the m^{th} candidate resource and a candidate resource (for example, some or all resources in an (m+1)^{th} candidate resource) after the m^{th} candidate resource. That the second configuration information indicates the second resource may be implemented as adding UCI-occupied resource index (UCI_occupied_Resource_Index) signaling to the RRC signaling, to indicate an index of the m^{th} candidate resource.

That the m^{th} candidate resource bears the indication information may also be understood as that the indication information is mapped starting from the m^{th} candidate resource, for example, starting from the m^{th} candidate resource according to a rule of frequency domain first and then time domain. Mapping the indication information starting from the m^{th} candidate resource may be mapping the indication information starting from a starting position of the m^{th} candidate resource, or mapping the indication information starting from a specified position of the m^{th} candidate resource, where a position from which mapping of the indication information starts is a resource starting position of the second resource.

Example 1: The m^{th} candidate resource may be a candidate resource with a smallest index in the M candidate resources.

Example 2: The second resource may belong to an overlapped region of at least two candidate resources in the M candidate resources. In this case, the m^{th} candidate resource may be any one of the at least two candidate resources forming the overlapped region. Optionally, if the at least two candidate resources forming the overlapped region include the first resource, both the indication information and the uplink information are transmitted on the first resource, so that the network device can receive the uplink information and the indication information on a same resource, thereby reducing a communication delay.

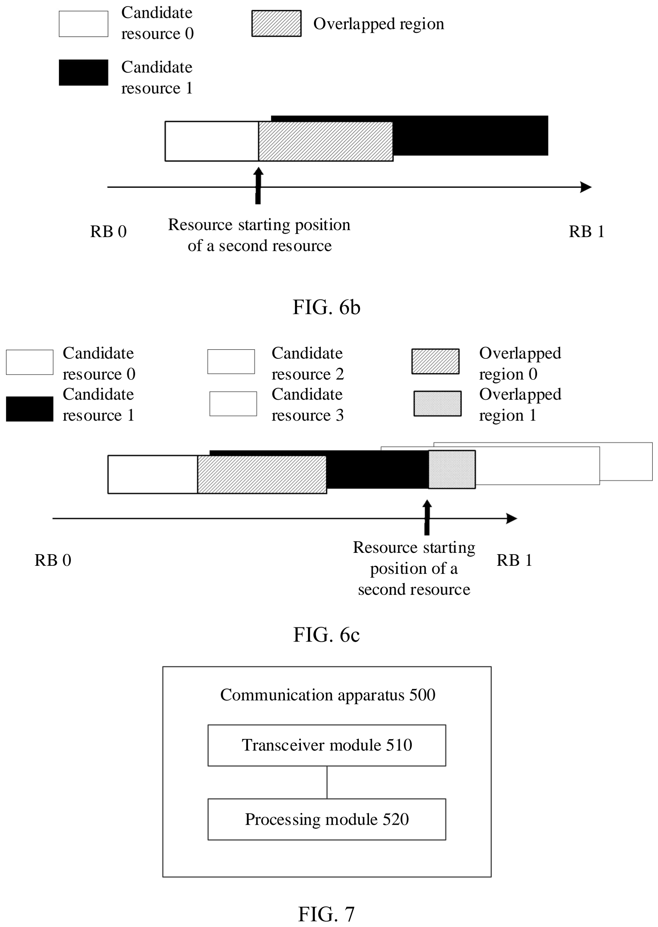

The at least two candidate resources may form the overlapped region in at least two manners. One manner is that there is an inclusion relationship between the candidate resources. For example, a candidate resource 0 includes a candidate resource 1, as shown in FIG. 6a. The other manner is that the candidate resources partially overlap. For example, a candidate resource 0 and a candidate resource 1 partially overlap, as shown in FIG. 6b. The overlapped region can be formed in the two manners.

In Example 2, the resource starting position of the second resource may be a position of an RB with a smallest sequence number in the overlapped region, that is, the indication information is mapped starting from the RB with the smallest sequence number in the overlapped region. For the resource starting position of the second resource, refer to FIG. 6a and FIG. 6b.

In a possible implementation of Example 2, the M candidate resources may form at least two overlapped regions, and the second resource may belong to one of the at least two overlapped regions.

In a first implementation, the second resource may belong to an overlapped region with a relatively high overlapping degree in the at least two overlapped regions. The overlapping degree of the overlapped region may be positively correlated with a quantity of candidate resources forming the overlapped region and/or a size of the overlapped region. For example, a larger quantity of candidate resources forming the overlapped region indicates a higher overlapping degree of the overlapped region, or a larger overlapped region indicates a higher overlapping degree of the overlapped region. When overlapping degrees of different overlapped regions that are determined based on quantities of candidate resources forming the overlapped regions are the same, the overlapping degrees of the overlapped regions may be distinguished based on sizes of the overlapped regions. Similarly, when overlapping degrees of different overlapped regions that are determined based on sizes of the overlapped regions are the same, the overlapping degrees of the different overlapped regions may be distinguished based on quantities of candidate resources forming the overlapped regions.

Refer to FIG. 6c. A candidate resource 0 to a candidate resource 3 form two overlapped regions. The candidate resource 0 and the candidate resource 2 form an overlapped region 1, and the candidate resource 1, the candidate resource 2, and the candidate resource 3 form an overlapped region 1. It is determined, based on quantities of candidate resources forming the overlapped regions, that the second resource belongs to the overlapped region 1. The indication information may be mapped starting from the overlapped region 1. For example, the indication information is mapped starting from an RB with a smallest sequence number in the overlapped region 1.

In a second implementation, overlapping degrees of the overlapped regions may not be distinguished. The resource starting position of the second resource is a position of an RB with a smallest sequence number in the at least two overlapped regions. In other words, the terminal device may map the indication information starting from the position of the RB with the smallest sequence number in the at least two overlapped regions. For example, the indication information is mapped starting from an RB with a smallest sequence number in an overlapped region 0 in FIG. 6c.

Compared with Example 2, Example 1 is more applicable, is not limited by the M candidate resources, and does not require determining an overlapped region, thereby reducing processing complexity. Example 2 is more applicable to a scenario in which at least two candidate resources in the M candidate resources overlap, and Example 2 increases a possibility of transmitting the indication information and the uplink information on a same resource, thereby ensuring an advantage of reducing the communication delay.

In this embodiment of this application, to further reduce complexity of blind detection performed by the network device, a quantity of RBs occupied by the second resource may be further agreed on, so that the terminal device maps the indication information within the agreed quantity of RBs. The quantity of RBs occupied by the second resource (or the indication information) may be agreed on in a protocol; or the quantity of RBs occupied by the second resource may be configured by the network device. Refer to FIG. 5. The method 400 further includes S440: The network device sends third configuration information to the terminal device, where the third configuration information indicates the quantity of RBs occupied by the second resource. Optionally, RRC signaling or DCI may bear the third configuration information. Same signaling, for example, RRC signaling, may bear the third configuration information and the second configuration information; or different signaling may bear the third configuration information and the second configuration information. This is not limited in this application. It should be understood that an execution sequence of S440, S430, and S410 is not limited in this application.

Further, the network device detects the indication information on the predefined or preconfigured second resource, to learn of the first resource occupied by the uplink information, and then decodes the first resource to obtain corresponding data.

The RB in this embodiment of this application may be a virtual (virtual) RB, and a sequence number of the RB may be a sequence number of a VRB.

FIG. 7 is a block diagram of a communication apparatus according to an embodiment of this application. The communication apparatus 500 may be a terminal device or a network device, an apparatus in a terminal device or a network device, or an apparatus that can be used together with a terminal device and a network device. In a possible implementation, the communication apparatus 500 may include modules or units that are in one-to-one correspondence with the method/operations/steps/actions performed by the terminal device or the network device in the foregoing method embodiments. The unit may be a hardware circuit or software, or may be implemented by a hardware circuit in combination with software. In a possible implementation, as shown in FIG. 7, the apparatus 500 may include a transceiver module 510 and a processing module 520.

Optionally, the communication apparatus 500 may correspond to the terminal device in the foregoing method embodiments.

When the communication apparatus 500 is configured to perform a method on the terminal device side, the transceiver module 510 may be configured to receive first configuration information, where the first configuration information is used to configure M candidate resources, and M is an integer greater than 1; the processing module 520 may be configured to determine a first resource from the M candidate resources; and the transceiver module 510 is further configured to send indication information, where the indication information carries an index of the first resource in the M candidate resources, and the first resource is used to send uplink information.

It should be understood that specific processes performed by the modules are described in detail in the foregoing method embodiments. For brevity, details are not described herein again.

Optionally, the communication apparatus 500 may correspond to the network device in the foregoing method embodiments.

When the communication apparatus 500 is configured to perform a method on the network device side, the transceiver module 510 may be configured to send first configuration information, where the first configuration information is used to configure M candidate resources, and M is an integer greater than 1; the transceiver module 510 is further configured to receive indication information, where the indication information carries an index of a first resource in the M candidate resources, and the first resource is used to send uplink information; and the processing module 520 may be configured to determine the first resource.

It should be understood that specific processes performed by the modules are described in detail in the foregoing method embodiments. For brevity, details are not described herein again.

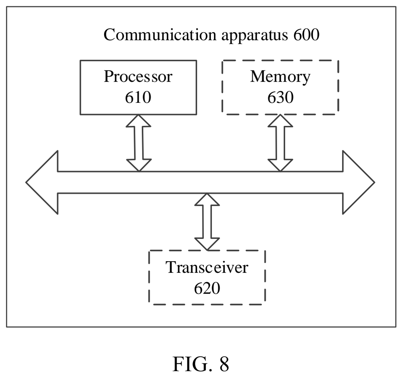

The transceiver module 510 in the communication apparatus 500 may be implemented through a transceiver, for example, may correspond to a transceiver 620 in a communication apparatus 600 shown in FIG. 8. The processing module 520 in the communication apparatus 500 may be implemented through at least one processor, for example, may correspond to a processor 610 in the communication apparatus 600 shown in FIG. 8.

When the communication apparatus 500 is a chip or a chip system configured in a communication device (for example, a terminal device or a network device), the transceiver module 510 in the communication apparatus 500 may be implemented as an input/output interface, a circuit, or the like, and the processing module 520 in the communication apparatus 500 may be implemented as a processor, a microprocessor, an integrated circuit, or the like integrated in the chip or the chip system.

FIG. 8 is another block diagram of a communication apparatus according to an embodiment of this application. As shown in FIG. 8, the communication apparatus 600 may include a processor 610. The processor 610 may be configured to perform the method performed by the terminal device or the network device in the foregoing method embodiments.

In some possible implementations, the communication apparatus 600 may include a transceiver 620. The transceiver 620 and the processor 610 may communicate with each other through an internal connection path. The processor 610 may control the transceiver 620 to send a signal and/or receive a signal.

In some possible implementations, the communication apparatus 600 may include a memory 630. The memory 630 and the processor 610 may communicate with each other through an internal connection path. The memory 630 and the processor 610 may be integrated together, or disposed separately. The memory 630 may alternatively be a memory outside the apparatus. The memory 630 is configured to store instructions, and the processor 610 is configured to execute the instructions stored in the memory 630, to perform the method in the foregoing method embodiments.

It should be understood that the communication apparatus 600 may correspond to the terminal device or the network device in the foregoing method embodiments, and may be configured to perform steps and/or procedures performed by the terminal device or the network device in the foregoing method embodiments. Optionally, the memory 630 may include a read-only memory and a random access memory, and provide instructions and data for the processor. A part of the memory may further include a non-volatile random access memory. The memory 630 may be a separate component, or may be integrated into the processor 610. The processor 610 may be configured to execute the instructions stored in the memory 630, and when the processor 610 executes the instructions stored in the memory, the processor 610 is configured to perform steps and/or procedures corresponding to the terminal device or the network device in the foregoing method embodiments.

Optionally, the communication apparatus 600 is the terminal device in the foregoing embodiments.

Optionally, the communication apparatus 600 is the network device in the foregoing embodiments.

The transceiver 620 may include a transmitter and a receiver. The transceiver 620 may further include an antenna, and there may be one or more antennas. The processor 610, the memory 630, and the transceiver 620 may be components integrated into different chips. For example, the processor 610 and the memory 630 may be integrated into a baseband chip, and the transceiver 620 may be integrated into a radio frequency chip. Alternatively, the processor 610, the memory 630, and the transceiver 620 may be components integrated into a same chip. This is not limited in this application.

Optionally, the communication apparatus 600 is a component configured in the terminal device, for example, a chip or a chip system.

Optionally, the communication apparatus 600 is a component configured in the network device, for example, a chip or a chip system.

The transceiver 620 may alternatively be a communication interface, for example, an input/output interface or a circuit. The transceiver 620, the processor 610, and the memory 630 may be integrated into a same chip, for example, integrated into the baseband chip.

This application further provides a processing apparatus. The processing apparatus includes at least one processor. The at least one processor runs a computer program or a logic circuit, to enable the processing apparatus to perform the method performed by the terminal device or the network device in the foregoing method embodiments. The processing apparatus may further include a memory. The memory is configured to store the computer program.

An embodiment of this application further provides a processing apparatus. The processing apparatus includes a processor and an input/output interface. The input/output interface is coupled to the processor. The input/output interface is configured to input and/or output information. The information includes at least one of instructions and data. The processor is configured to execute a computer program, to enable the processing apparatus to perform the method performed by the terminal device or the network device in the foregoing method embodiments.

An embodiment of this application further provides a processing apparatus. The processing apparatus includes a processor and a memory. The memory is configured to store a computer program, and the processor is configured to: invoke the computer program from the memory and run the computer program, to enable the processing apparatus to perform the method performed by the terminal device or the network device in the foregoing method embodiments.

It should be understood that the processing apparatus may be one or more chips. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a microcontroller (microcontroller unit, MCU), a programmable controller (programmable logic device, PLD), or another integrated chip.

During implementation, steps in the foregoing methods can be implemented by using a hardware integrated logic circuit in the processor, or by using instructions in a form of software. The steps in the methods disclosed with reference to embodiments of this application may be directly performed and completed by a hardware processor, or may be performed and completed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

The processor in embodiments of this application may be an integrated circuit chip, and has a signal processing capability. During implementation, steps in the foregoing method embodiments can be implemented by using a hardware integrated logic circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes, but is not limited to, these and any memory of another proper type.

According to the methods provided in embodiments of this application, this application further provides a computer program product. The computer program product includes a computer program or a group of instructions. When the computer program or the group of instructions are run on a computer, the computer is enabled to perform the method performed by the terminal device or the network device in the foregoing method embodiments.

According to the methods provided in embodiments of this application, this application further provides a computer-readable storage medium. The computer-readable storage medium stores a program. When the program runs on a computer, the computer is enabled to perform the method performed by the terminal device or the network device in the foregoing method embodiments.

According to the methods provided in embodiments of this application, this application further provides a communication system. The communication system may include the foregoing terminal device and network device.

Terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, the disclosed system, apparatus, and method may be implemented in another manner. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on this understanding, a part that essentially contributes to the technical solutions of this application or a part of the technical solutions may be embodied in a form of a software product. The computer software product is stored in a storage medium, and includes several instructions for enabling a computer device (which may be a personal computer, a server, a network device, or the like) to perform all or some steps of the methods in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving first configuration information, wherein the first configuration information is used to configure M candidate resources, and M is an integer greater than 1; and
sending indication information, wherein the indication information carries an index of a first resource in the M candidate resources, and the first resource is used to send uplink information.

2. The method according to claim 1, wherein the index of the first resource is related to one of the following:
a frequency domain resource allocation FDRA index that is in the first configuration information and that is used to configure the first resource; and
a sequence number of the first resource in the M candidate resources, wherein the M candidate resources are sorted based on resource sizes and/or frequency domain positions.

3. The method according to claim 1, wherein the M candidate resources comprise resources configured by M configured grants CGs; and
a value of the index of the first resource is related to an index of a CG corresponding to the first resource.

4. The method according to any one of claims 1 to 3, wherein the indication information occupies a second resource; and
the second resource belongs to an m^{th} candidate resource in the M candidate resources.

5. The method according to claim 4, wherein the m^{th} candidate resource is a candidate resource with a smallest index in the M candidate resources.

6. The method according to claim 4 or 5, wherein a resource starting position of the second resource is a resource starting position of the m^{th} candidate resource.

7. The method according to claim 4, wherein the second resource belongs to an overlapped region of at least two candidate resources in the M candidate resources.

8. The method according to claim 7, wherein the M candidate resources form at least two overlapped regions, and the second resource belongs to an overlapped region with a relatively high overlapping degree in the at least two overlapped regions; and
the overlapping degree of the overlapped region is positively correlated with a quantity of candidate resources forming the overlapped region and/or a size of the overlapped region.

9. The method according to claim 7 or 8, wherein a resource starting position of the second resource is a position of a resource block RB with a smallest sequence number in the overlapped region.

10. The method according to claim 7, wherein the M candidate resources form at least two overlapped regions; and
a resource starting position of the second resource is a position of an RB with a smallest sequence number in the at least two overlapped regions.

11. The method according to any one of claims 1 to 3, wherein the indication information occupies a second resource, and the method further comprises:
receiving second configuration information, wherein the second configuration information indicates the second resource.

12. The method according to any one of claims 1 to 11, wherein the indication information occupies the second resource, and a quantity of RBs occupied by the second resource is a preset value.

13. The method according to any one of claims 1 to 11, wherein the indication information occupies the second resource, and the method further comprises:
receiving third configuration information, wherein the third configuration information indicates a quantity of RBs occupied by the second resource.

14. A communication method, comprising:
sending first configuration information, wherein the first configuration information is used to configure M candidate resources, and M is an integer greater than 1; and
receiving indication information, wherein the indication information carries an index of a first resource in the M candidate resources, and the first resource is used to send uplink information.

15. The method according to claim 14, wherein the index of the first resource is related to one of the following:
a frequency domain resource allocation FDRA index that is in the first configuration information and that is used to configure the first resource; and
a sequence number of the first resource in the M candidate resources, wherein the M candidate resources are sorted based on resource sizes and/or frequency domain positions.

16. The method according to claim 14, wherein the M candidate resources comprise resources configured by M configured grants CGs; and
a value of the index of the first resource is related to an index of a CG corresponding to the first resource.

17. The method according to any one of claims 14 to 16, wherein the indication information occupies a second resource; and
the second resource belongs to an m^{th} candidate resource in the M candidate resources.

18. The method according to claim 17, wherein the m^{th} candidate resource is a candidate resource with a smallest index in the M candidate resources.

19. The method according to claim 17 or 18, wherein a resource starting position of the second resource is a resource starting position of the m^{th} candidate resource.

20. The method according to claim 17, wherein the second resource belongs to an overlapped region of at least two candidate resources in the M candidate resources.

21. The method according to claim 20, wherein the M candidate resources form at least two overlapped regions, and the second resource belongs to an overlapped region with a relatively high overlapping degree in the at least two overlapped regions; and
the overlapping degree of the overlapped region is positively correlated with a quantity of candidate resources forming the overlapped region and/or a size of the overlapped region.

22. The method according to claim 20 or 21, wherein a resource starting position of the second resource is a position of a resource block RB with a smallest sequence number in the overlapped region.

23. The method according to claim 20, wherein the M candidate resources form at least two overlapped regions; and
a resource starting position of the second resource is a position of an RB with a smallest sequence number in the at least two overlapped regions.

24. The method according to any one of claims 14 to 16, wherein the indication information occupies a second resource, and the method further comprises:
sending second configuration information, wherein the second configuration information indicates the second resource.

25. The method according to any one of claims 14 to 24, wherein the indication information occupies the second resource, and a quantity of RBs occupied by the second resource is a preset value.

26. The method according to any one of claims 14 to 24, wherein the indication information occupies the second resource, and the method further comprises:
sending third configuration information, wherein the third configuration information indicates a quantity of RBs occupied by the second resource.

27. A communication apparatus, comprising a module configured to perform the method according to any one of claims 1 to 13.

28. A communication apparatus, comprising a module configured to perform the method according to any one of claims 14 to 26.

29. A communication device, comprising a processor and a memory, wherein the memory is configured to store a computer program, and the processor is configured to invoke and run the computer program stored in the memory, to perform the method according to any one of claims 1 to 13.

30. A communication device, comprising a processor and a memory, wherein the memory is configured to store a computer program, and the processor is configured to invoke and run the computer program stored in the memory, to perform the method according to any one of claims 14 to 26.

31. A chip, comprising a processor, configured to: invoke computer instructions from a memory and run the computer instructions, to enable a device in which the chip is installed to perform the method according to any one of claims 1 to 13.

32. A chip, comprising a processor, configured to: invoke computer instructions from a memory and run the computer instructions, to enable a device in which the chip is installed to perform the method according to any one of claims 14 to 26.

33. A computer-readable storage medium, configured to store computer program instructions, wherein the computer program enables a computer to perform the method according to any one of claims 1 to 26.

34. A computer program product, comprising computer program instructions, wherein the computer program instructions enable a computer to perform the method according to any one of claims 1 to 26.

35. A communication system, comprising the apparatus according to claim 27 and the apparatus according to claim 28.
